(19) Europäisches Patentamt / European Patent Office / Office européen des brevets

(11) **EP 1 724 531 B1**

(12) **FASCICULE DE BREVET EUROPEEN**

(45) Date de publication et mention de la délivrance du brevet:
**03.06.2009 Bulletin 2009/23**

(51) Int Cl.:
**F24D 11/02** (2006.01) **F24D 17/00** (2006.01)
**F24D 17/02** (2006.01)

(21) Numéro de dépôt: **06300437.8**

(22) Date de dépôt: **03.05.2006**

(54) **Système et procédé de chauffage de l'eau chaude sanitaire utilisant la chaleur résiduelle des eaux usées**

Vorrichtung und Verfahren zur Erzeugung von heißem Brauchwasser unter Ausnutzung von Abwasserrestwärme

System and method for heating sanitary hot water using residual heat of waste water

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.05.2005 FR 0504597**

(43) Date de publication de la demande:
**22.11.2006 Bulletin 2006/47**

(73) Titulaire: **ARMINES**
**75272 Paris Cedex 06 (FR)**

(72) Inventeurs:
• **CLODIC, Denis**
**75006, PARIS (FR)**
• **SIMON, Thierry**
**92370, CHAVILLE (FR)**

(74) Mandataire: **Grynwald, Albert**
**SCHMIT CHRETIEN**
**16, rue de la Paix**
**75002 Paris (FR)**

(56) Documents cités:
EP-A- 0 215 966 DE-A1- 3 011 565
DE-A1- 3 202 804 DE-A1- 4 005 577
FR-A- 2 282 605 FR-A- 2 538 523
US-A- 4 422 932

• **PATENT ABSTRACTS OF JAPAN vol. 010, no. 100 (M-470), 16 avril 1986 (1986-04-16) & JP 60 235949 A (EIJI KIMOTO), 22 novembre 1985 (1985-11-22)**

## Description

L'invention est relative à un système de production d'eau chaude sanitaire mettant en oeuvre un dispositif de pompe à chaleur pour récupérer la chaleur résiduelle des eaux usées.

La production d'eau chaude sanitaire constitue le deuxième poste de dépenses énergétiques pour les habitations domestiques. Elle constitue aussi un poste très important de la consommation énergétique des hôtels, des maisons de retraite, des cuisines collectives mais aussi de nombreuses utilisations industrielles, par exemple dans l'agro-alimentaire. Selon les pays, cette eau chaude est principalement produite soit par des résistances électriques, soit par des chaudières à combustible, soit, beaucoup plus rarement, par des pompes à chaleur.

Jusqu'à présent, soit les chaudières de production d'eau chaude sanitaire produisent des quantités très importantes de $CO_2$, soit le coût énergétique de la production d'eau chaude sanitaire par électricité est très élevé. Dans tous les cas, les émissions de $CO_2$ associées à la production d'électricité ou associées aux chaudières sont considérées comme trop élevées dans le cadre du développement durable et de l'application du Protocole de Kyoto. Il existe donc un besoin sociétal profond pour concevoir des systèmes à très haute efficacité énergétique pour la production d'eau chaude sanitaire.

De nombreux dispositifs connus permettent de récupérer une partie de la chaleur des eaux usées par un simple échangeur entre l'eau froide entrante et les eaux usées sortantes. L'inconvénient de tels dispositifs est la faible quantité d'énergie récupérée.

Le document US-4422932 décrit un système de chauffage d'eau sanitaire mettant en oeuvre un dispositif de pompe à chaleur comprenant un évaporateur intégrée dans un réservoir de stockage d'eaux usées.

La présente invention a pour objet de produire de l'eau chaude sanitaire en minimisant de manière drastique l'énergie électrique nécessaire à la produire, en utilisant la chaleur résiduelle des eaux usées récupérées à cet effet.

Ainsi, l'invention concerne un système de chauffage de l'eau chaude sanitaire mettant en oeuvre un dispositif de pompe à chaleur comprenant un évaporateur et une pompe immergée intégrés dans un réservoir de stockage des eaux usées ; caractérisé en ce que l'évaporateur est alimenté par la pompe immergée qui aspire l'eau la plus chaude en haut du réservoir de stockage.

Ainsi, un système selon l'invention est conçu pour obtenir la plus grande efficacité énergétique possible : l'évaporateur est intégré dans le réservoir et est donc immergé dans l'eau tiède. De plus, l'utilisation d'une pompe pour faire circuler les eaux usées à travers l'échangeur procure un coefficient d'échange important. Enfin, toujours dans le but d'obtenir la meilleure efficacité possible, l'immersion de la pompe permet de réduire les pertes énergétiques, à la fois thermiques (la pompe est immergée dans l'eau tiède) et mécaniques (la pompe est au plus près de l'échangeur, les pertes de charge sont donc moindres). L'immersion de la pompe permet également une grande compacité du système.

La différence de température plus faible entre les eaux usées et l'extérieur du réservoir que dans le cas d'un système classique utilisant un ballon d'eau chaude, dans lequel l'eau est stockée à la température minimum de 60°C, permet également de réaliser des économies sur l'isolation thermique nécessaire pour le réservoir.

Le système selon l'invention offre donc un moyen de chauffage de l'eau sanitaire efficace et peu consommateur d'énergie.

Dans une réalisation, l'eau usée refroidie dans l'évaporateur intégré dans le réservoir de stockage des eaux usées est rejetée dans la partie basse du réservoir de stockage des eaux usées en vue de favoriser la stratification thermique d'eau tiède dans le réservoir de stockage des eaux usées, et en limitant la vitesse de diffusion de cette eau froide dans le réservoir de stockage des eaux usées, notamment au moyen d'une plaque anti-remous.

Dans une réalisation, l'eau est chauffée instantanément, sans stockage d'eau chaude, en vue de limiter sa température d'utilisation.

Dans une réalisation, le réservoir est alimenté en eaux usées seulement si la température des eaux usées est supérieure à la température du réseau d'eau froide, excepté lors du remplissage initial.

Dans une réalisation, le système est tel que lors d'un démarrage à froid du système, un dispositif de contrôle et une résistance électrique permettent d'éviter toute prise en glace de l'évaporateur intégré dans le réservoir des eaux usées .

L'invention concerne également un procédé de chauffage de l'eau chaude sanitaire, comprenant l'étape de puiser les calories de la partie la plus chaude des eaux thermiquement stratifiées d'un réservoir de stockage des eaux usées au moyen d'une pompe à chaleur comprenant un évaporateur intégré dans le réservoir de stockage des eaux usées, l'évaporateur étant alimenté par une pompe immergée dans le réservoir, la pompe aspirant l'eau la plus chaude en haut du réservoir.

La source froide de la pompe à chaleur est constituée par un réservoir de stockage dans lequel s'accumule les eaux usées, ce qui permet de disposer dans presque toutes les occurrences d'un niveau de température beaucoup plus élevé que la température d'eau froide du réseau, qui constitue le puits chaud de la pompe à chaleur. La pompe à chaleur permet de produire instantanément de l'eau chaude sanitaire, sans stockage d'eau chaude dans un réservoir tampon, ce qui permet alors de la produire à un niveau de température de 45 °C et non plus à un niveau de 60 °C, comme l'imposent plusieurs législations pour éviter la prolifération de légionnelles dans les ballons d'eau chaude sanitaire. Cette différence de température de chauffage de l'eau sanitaire représente une économie d'énergie supplémentaire.

Un des buts de l'invention est donc de minimiser l'écart entre la source froide et le puits chaud, ce qui est la garantie de la plus haute efficacité énergétique. En effet, le rendement idéal d'une pompe à chaleur s'exprime en fonction des températures de source et de puits selon la formule suivante :

$$COP_{idéal} = \frac{Tpuits}{Tpuits - Tsource}$$

dans laquelle :

- COP$_{idéal}$ est le coefficient de performance idéal de la pompe à chaleur,
- Tpuits est la température du puits chaud exprimée en Kelvin (dans l'exemple, le puits chaud est l'eau du réseau à réchauffer pour en faire de l'eau chaude sanitaire),
- Tsource est la température de la source froide exprimée en Kelvin (dans l'exemple la source froide est constituée par les eaux usées du réservoir de stockage).

Le coefficient de performance réel des pompes à chaleur suit la loi de comportement général du COP$_{idéal}$.

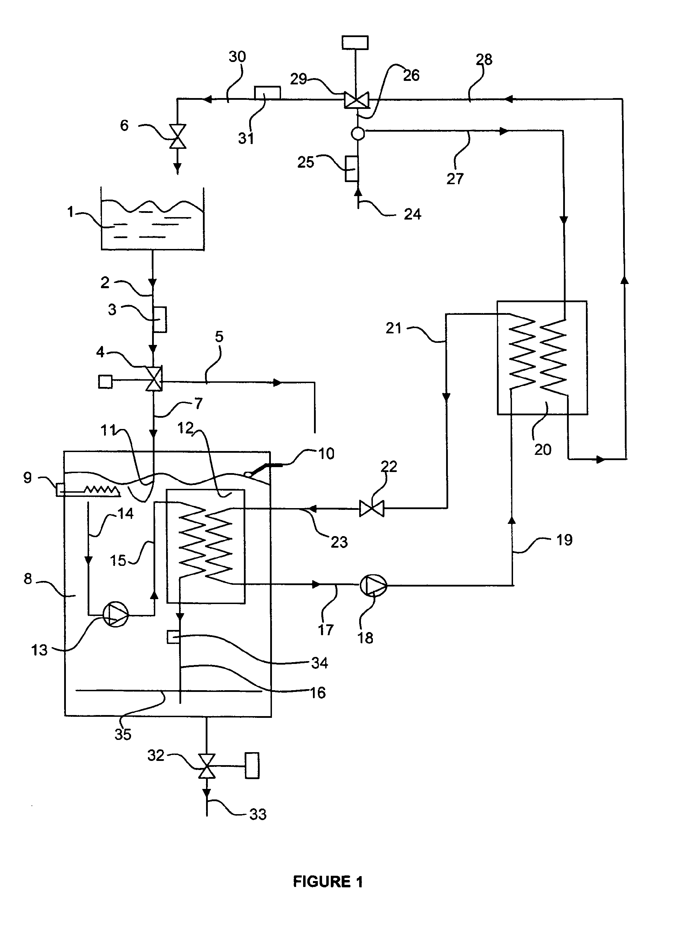

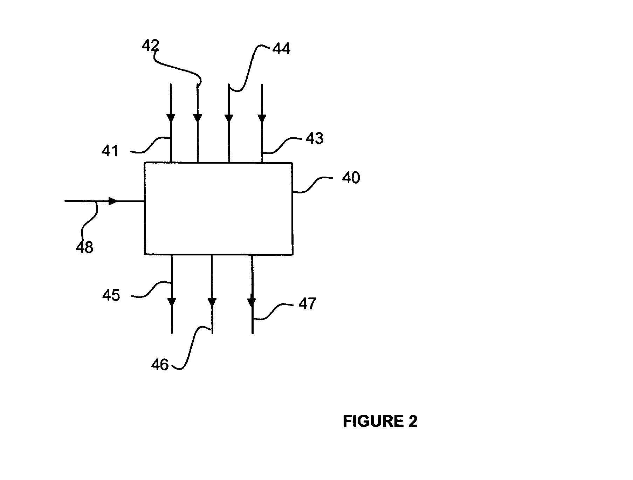

Une description détaillée en utilisant les références numériques portées sur les figures 1 et 2 permettra de mieux comprendre un exemple de réalisation de l'invention.

- la figure 1 est un schéma d'un système selon l'invention.
- la figure 2 est un schéma d'une régulation d'un système selon l'invention.

Le volume 1 de la figure 1 représente une source d'eau tiède qui peut être un évier, une machine à laver le linge ou la vaisselle, une baignoire, un lavabo ou toute source d'eaux usées tiède d'une habitation collective ou individuelle ou d'un site industriel. Un collecteur 2 représente les tuyauteries de récupération des eaux usées provenant des différentes sources d'une habitation collective ou individuelle ou d'un site industriel.

Ce collecteur comprend des moyens de filtration des eaux usées, évitant la présence de déchets qui pourraient provoquer un dysfonctionnement du système de récupération d'énergie présenté ci-après. Lorsque ces eaux usées ont une température supérieure à la température d'eau froide, elles sont alors dirigées vers le réservoir de stockage 8 où elles sont stockées de manière stratifiée via la tuyauterie 11 conçue de manière à remplir le réservoir de stockage 8 par le haut, aidant donc à la stratification thermique de manière que l'eau la plus chaude se situe dans la partie la plus haute du réservoir 8.

Lorsqu'il y a une utilisation d'eau chaude sanitaire alors la pompe 13 immergée dans le réservoir 8 est mise en fonctionnement et aspire par la tuyauterie 14 l'eau la plus chaude et la refoule via la tuyauterie 15 dans l'évaporateur 12. L'eau refroidie sort de l'évaporateur 12 par la tuyauterie 16 dans la partie inférieure du réservoir 8, où est disposée une plaque anti-remous 35 afin d'éviter les remous et le mélange de l'eau froide avec l'eau plus chaude, en vue de maintenir la stratification thermique dans le réservoir 8. Cette plaque anti-remous 35 permet d'obtenir une très faible vitesse de diffusion de l'eau froide dans les parties juste au-dessus de la plaque anti-remous, la paroi du fond du réservoir servant de brise jet.

L'évaporateur 12 intégré dans le réservoir 8 extrait la chaleur résiduelle des eaux usées pour la fournir à la pompe à chaleur à compression de vapeur, qui est constituée principalement par l'évaporateur 12, le compresseur 18, le condenseur 20 et le détendeur 22. Cette pompe à chaleur transfère donc l'énergie thermique de l'eau tiède contenue dans le réservoir 8 pour chauffer l'eau du réseau d'eau chaude sanitaire par le condenseur 20.

L'eau froide arrivant par la tuyauterie 24 passe soit intégralement par la tuyauterie 27 soit par la tuyauterie 27 et partiellement par la tuyauterie 26, ce en fonction des valeurs de réglage de la vanne trois voies 29. L'eau froide s'échauffe dans le condenseur 20 et en sort par la tuyauterie 28, la température d'utilisation par un des nombreux postes consommateurs, représentés par le robinet 6, est contrôlée via la sonde de mesure 31 installée sur la tuyauterie 30, qui correspond aux tuyauteries d'alimentation d'eau chaude. La régulation globale de température sera expliquée plus loin dans ce texte.

Le système est conçu de telle manière que la pompe à chaleur produit de l'eau chaude de manière instantanée. En effet, la pompe à chaleur produit de l'eau chaude sanitaire à la demande, aussi bien lorsque de l'eau tiède est simultanément recueillie dans le réservoir 8 que lorsque celui-ci n'est pas alimenté. C'est l'avantage de disposer d'une réserve d'eau usée.

Lorsque la pompe à chaleur est en fonctionnement, le fluide frigorigène s'évapore dans l'évaporateur 12 après détente par le détendeur 22. Il entre dans l'évaporateur 12 par la tuyauterie 23 et en sort par la tuyauterie 17, après avoir extrait de la chaleur utile des eaux usées mises en circulation par la pompe 13 dans le réservoir 8.

Le fluide frigorigène qui s'est évaporé dans l'évaporateur 12 est comprimé sous haute pression par le compresseur 18 puis amené par la tuyauterie 19 au condenseur 20. La somme de la puissance frigorifique extraite dans l'évaporateur 12 et de la puissance transmise par le compresseur au fluide frigorigène correspond à la puissance thermique de condensation qui est transmise à l'eau froide du réseau. Cette eau froide entre dans le condenseur 20 par la tuyauterie 27 et en ressort par la tuyauterie 28. Le fluide frigorigène sort du condenseur par la tuyauterie 21 puis est détendu par le détendeur 22, ce qui complète le circuit de la pompe à chaleur.

Globalement, la pompe à chaleur réutilise la chaleur contenue dans les eaux usées jusqu'à la température d'entrée de l'eau froide permettant ainsi une récupération complète de l'énergie thermique disponible dans les eaux usées. Pour évaluer les gains d'efficacité énergétique associés à un tel procédé dans l'usage domestique, en prenant une eau usée rentrant à 35 °C et en considérant que cette eau usée est refroidie jusqu'à 15 °C, toutes choses égales par ailleurs, on peut considérer que la température moyenne de cette source froide, au sens thermodynamique du terme, est de 25 °C.

Comme il n'y a pas de ballon d'eau chaude et donc pas de déperditions liées au stockage à 60 °C de cette eau chaude, et compte tenu de la production instantanée de chaleur associée au fonctionnement de la pompe à chaleur, l'eau chaude est délivrée à 45 °C. La température est contrôlée à la fois par le régulateur 40 et la vanne trois voies 29. En prenant en compte des écarts de température standards de 5 K entre le fluide frigorigène qui s'évapore dans l'évaporateur 12 et le fluide frigorigène qui se condense dans le condenseur 20, les températures moyennes d'évaporation et de condensation sont respectivement de 20 et de 50 °C. Le $COP_{idéal}$ d'un tel système vaut donc, dans ces conditions, 323/30 = 10,7.

En considérant qu'avec les technologies standard le rapport du coefficient de performance réel d'une pompe à chaleur sur le coefficient idéal est de l'ordre de 70 %, le COP d'une telle machine se situe aux alentours de 7,5. Des essais en laboratoire effectués sur un tel système ont montré des COP réels de 7.

Le système selon l'invention, comparativement à une résistance électrique d'un ballon de chauffage, consomme 7 fois moins d'électricité, et ce sans compter les pertes thermiques. Lorsque ces pertes thermiques sont intégrées, la consommation d'énergie est 8 fois moins importante.

D'autre part, lorsqu'on compare un tel système à des pompes à chaleur qui utilisent l'air extérieur comme source froide, le COP est amélioré presque d'un facteur 2. En effet, les COP typiques des pompes à chaleur pour le chauffage de l'eau chaude sanitaire étant de l'ordre de 3,5. Pour des niveaux de température supérieurs d'utilisation de l'eau chaude comme dans l'industrie, les mêmes raisonnements s'appliquent mais à des niveaux de température différents, les gains énergétiques étant toujours liés à la récupération des calories dans les eaux tièdes et à leur potentialisation à un plus haut niveau énergétique par une pompe à chaleur.

Les logiques de régulation et de démarrage s'appuient sur les figures 1 et 2 et la description suivante. Le capteur de température 3, qui peut être un thermocouple, une thermistance ou une résistance platine, envoie un signal électrique analogique au module de régulation 40 via la voie d'entrée 41. Le programme de calcul intégré dans le régulateur 40 compare la valeur de cette température mesurée par le capteur 3 à la température d'eau froide entrante mesurée par le capteur de température 25 qui est relié au régulateur 40 par la voie d'entrée 42. S'il n'y a pas de circulation d'eau froide entrante par la tuyauterie 24 c'est la dernière valeur enregistrée par le capteur 25 et enregistrée par le régulateur 40 qui sera prise en compte pour la comparaison.

Si la température de l'eau usée est inférieure à la température de l'eau froide du réseau entrant par la tuyauterie 24, les eaux usées sont alors évacuées par la tuyauterie 5, le régulateur 40 mettant via sa voie de sortie 45 la vanne trois voies 4 dans la position reliant la tuyauterie 2 à la tuyauterie 5 de mise à l'égout.

Si, au contraire, la température de l'eau usée mesurée en 3 est supérieure à la température de l'eau du réseau mesurée en 25, alors le régulateur 40 met via sa voie de sortie 45 la vanne trois voies 4 dans la position permettant la circulation de l'eau usée de la canalisation 2 vers la canalisation 7 alimentant en eaux usées tièdes le réservoir 8.

Le niveau du réservoir 8 est contrôlé par le contrôleur de niveau électrique 10 relié lui aussi au régulateur 40 via la voie d'entrée 43. Lorsque ce niveau arrive à la position maximale, compte tenu de l'indication du régulateur de niveau 10, le régulateur 40 via sa voie de sortie 46 met l'électrovanne 32 en position ouverte pour que l'excédent d'eau la plus froide, car puisée en bas du réservoir 8, s'écoule hors du réservoir 8 et soit drainé vers le tout à l'égout via la canalisation 33 jusqu'à ce que le régulateur de niveau 10 revienne à sa position basse, ce qui entraîne alors la fermeture de l'électrovanne 32, signal envoyé par le régulateur 40 via sa voie de sortie 46.

Le résultat global de ce transfert d'eau est que l'eau la plus chaude a remplacé l'eau la plus froide dans le réservoir 8. De plus, ce remplacement s'est effectué de manière stratifiée, l'eau chaude étant approvisionnée par le haut et l'eau la plus froide étant recueillie puis évacuée par le bas.

Lors du démarrage initial, la première fois que le système est utilisé, le régulateur 40 met via sa voie de sortie 45 la vanne trois voies 4 dans la position permettant d'alimenter le réservoir 8 quel que soit l'écart de température indiqué respectivement par les sondes 3 et 25, le réservoir est alors rempli jusqu'au niveau maximum contrôlé par le contrôleur de niveau 10.

Il existe des réglementations anti-brûlures qui obligent à ce que la température la plus haute de l'eau chaude sanitaire soit fixée à 45 °C. Pour les applications domestiques, cette valeur de température maximale ne peut pas être dépassée et est intégrée dans le programme de régulation du régulateur 40. Cette température peut être abaissée, en particulier pour des raisons d'économie d'énergie, par une entrée 48 du régulateur 40 où l'utilisateur peut régler ce seuil de température, ce qui permet alors à la pompe à chaleur de fonctionner à une température de condensation inférieure à 50 °C.

En revanche, il ne faut pas confondre cette régulation de température centralisée du système de chauffage et les températures d'utilisation aux différents robinets où les mélanges eau chaude / eau froide peuvent être librement réglés par les utilisateurs selon les moyens classiques des robinets mitigeurs ou mélangeurs.

D'autre part, il existe un rapport température / débit en fonction de la valeur de la température d'entrée d'eau en 24. On sait qu'en fonction de la saison cette eau froide peut varier typiquement de 5 à 20 °C. C'est le rôle de la vanne trois voies 29 et du régulateur 40 de fixer le rapport de débit entre la tuyauterie 27 et la tuyauterie 26 et les besoins appelés sur la tuyauterie 30 afin de fixer des conditions de condensation stables au condenseur 20.

Des moyens complémentaires connus, comme un moteur électrique à vitesse variable du compresseur ou l'utilisation d'une puissance étagée par utilisation de deux compresseurs de tailles différentes ou encore plus simplement par un système marche-arrêt du compresseur, permettent de moduler soit le débit moyen, soit le débit instantané de fluide frigorigène afin de maintenir une température de condensation stable en fonction du débit et de la température d'eau passant par la tuyauterie 27 et en vue de maintenir la température de sortie d'eau par la tuyauterie 28 à 45 °C environ.

Selon les moyens de contrôle du débit du compresseur, le régulateur 40 peut être doté d'entrées et de sorties supplémentaires pour la mise en marche et arrêt du ou des compresseur(s) ou la modulation du variateur de fréquence. Selon les domaines d'application, les niveaux de température peuvent être aussi adaptés.

Après un arrêt prolongé de l'installation, par exemple en raison du départ en vacances des occupants, ou lors du démarrage initial, l'eau stockée dans le réservoir 8 peut être à une température égale à la température d'entrée d'eau froide. Lorsque le besoin de production d'eau chaude sanitaire apparaît, la température de l'eau stockée dans le réservoir peut s'abaisser jusqu'à ce que de la glace soit formée si cette température devient inférieure à 0 °C. Pour empêcher cette éventuelle production de glace, une résistance électrique 9 est installée dans la partie haute du réservoir de stockage 8 et est mise en fonctionnement via la sortie 47 du régulateur 40 dès que le capteur température 34 sur la tuyauterie 16 envoie son signal au régulateur 40 par la voie d'entrée 44 indiquant une température inférieure à 2 °C. Ce fonctionnement de la résistance électrique est exceptionnel mais il permet d'assurer dans tous les cas la production d'eau chaude sanitaire.

Lorsque la température de sortie d'eau chaude sanitaire mesurée par le capteur 34 devient supérieure à 3 °C, le régulateur 40 arrête la résistance électrique 9 via sa voie de sortie 47.

Dans une variante, le réservoir de stockage et la pompe à chaleur sont intégrés dans même boitier, pour une plus grande compacité, et pour faciliter l'intégration du système de chauffage, par exemple dans un logement individuel.

## Revendications

**1.** Système de chauffage de l'eau chaude sanitaire mettant en oeuvre un dispositif de pompe à chaleur comprenant un évaporateur (12) et une pompe (13) immergée intégrés dans un réservoir de stockage des eaux usées (8) ; **caractérisé en ce que** l'évaporateur (12) est alimenté par la pompe immergée qui aspire l'eau la plus chaude en haut du réservoir de stockage.

**2.** Système selon la revendication 1 ; le système étant tel que l'eau usée refroidie dans l'évaporateur intégré dans le réservoir de stockage des eaux usées (8) est rejetée dans la partie basse du réservoir de stockage des eaux usées (8) en vue de favoriser la stratification thermique d'eau tiède dans le réservoir de stockage des eaux usées (8), et en limitant la vitesse de diffusion de cette eau froide dans le réservoir de stockage des eaux usées (8), notamment au moyen d'une plaque anti-remous (35).

**3.** Système selon l'une des revendications 1 et 2; le système étant tel que l'eau est chauffée instantanément sans stockage d'eau chaude en vue de limiter sa température d'utilisation.

**4.** Système selon l'une des revendications 1 à 3 ; le système comprenant des moyens pour alimenter le réservoir (8) en eaux usées seulement si la température des eaux usées est supérieure à la température du réseau d'eau froide, excepté lors du remplissage initial.

**5.** Système selon l'une des revendications 1 à 4 ; comprenant un dispositif de contrôle et une résistance électrique afin d'éviter, lors d'un démarrage à froid du système, toute prise en glace de l'évaporateur (12) intégré dans le réservoir des eaux usées (8).

**6.** Procédé de chauffage de l'eau chaude sanitaire comprenant l'étape de puiser les calories de la partie la plus chaude des eaux thermiquement stratifiées d'un réservoir de stockage des eaux usées (8) au moyen d'une pompe à chaleur comprenant un évaporateur (12) intégré dans le réservoir de stockage des eaux usées (8), l'évaporateur étant alimenté par une pompe immergée dans le réservoir (8), la pompe (13) aspirant l'eau la plus chaude en haut du réservoir.

## Claims

**1.** A domestic hot water heating system implementing a heat pump device including an evaporator (12) and a submerged pump (13) integrated in a used water storage reservoir (8); **characterised in that** evaporator (12) is fed by the submerged pump which pumps the hottest water at the top of the storage reservoir.

2.  A system according to claim 1; the system being such that the used water cooled down in the evaporator integrated into used water storage reservoir (8) is sent back into the bottom of used water storage reservoir (8) in view of promoting thermal stratification of warm water in used water storage reservoir (8), and by limiting the diffusion speed of this cold water in used water storage reservoir (8), notably with an anti-eddy plate (35).

3.  A system according to one of claims 1 and 2; the system being such that the water is instantly heated without hot water storage in view of limiting its operating temperature.

4.  A system according to one of claims 1 to 3; the system includes means for supplying reservoir (8) with used water, only if the temperature of the used water is higher than the temperature of the cold water network, except during initial filling.

5.  A system according one of claims 1 to 4; including a monitoring device and an electrical resistor so as to avoid, during a system cold start, any freezing of evaporator (12) integrated into used water reservoir (8).

6.  A domestic hot water heating method including the step of drawing the calories from the hottest part of the thermally stratified water of a used water storage reservoir (8) by means of a heat pump including an evaporator (12) integrated into used water storage reservoir (8), the evaporator being fed by a pump submerged in reservoir (8), pump (13) pumping the hottest water at the top of the reservoir.

**Patentansprüche**

1.  System zum Aufheizen von Warmwasser, das eine Wärmepumpenanlage mit einem Verdampfer (12) und einer Tauchpumpe (13) zur Anwendung bringt, die in einen Abwasserlagertank (8) integriert sind; **dadurch gekennzeichnet, dass** der Verdampfer (12) durch die Tauchpumpe versorgt wird, die das wärmste Wasser im oberen Bereich des Lagertanks absaugt.

2.  System nach Anspruch 1; das System ist dabei so gestaltet, dass das abgekühlte Abwasser im Verdampfer, der im Abwasserlagertank (8) integriert ist, in den unteren Bereich des Abwasserlagertanks (8) gespült wird, mit der Absicht, die thermische Schichtung des lauwarmen Wassers im Abwasserlagertank (8) zu unterstützen, und durch die Begrenzung der Diffusionsgeschwindigkeit dieses kalten Wassers im Abwasserlagertank (8), speziell durch die Verwendung eines Schottblechs (35).

3.  System nach einem der Ansprüche 1 und 2; das System ist dabei so gestaltet, dass das Wasser sofort und ohne Lagerung des Warmwassers erwärmt wird, mit der Absicht, die Verwendungstemperatur zu begrenzen.

4.  System nach einem der Ansprüche 1 bis 3; das System enthält dabei Mittel, die den Tank (8) nur dann mit Abwasser versorgen, wenn die Temperatur der Abwässer über der Temperatur des Kaltwassernetzes liegt, außer bei der Erstbefüllung.

5.  System nach einem der Ansprüche 1 bis 4; mit einer Kontrollvorrichtung und einem elektrischen Widerstand, um bei einem Kaltstart des Systems zu vermeiden, dass der Verdampfer (12), der im Abwassertank (8) integriert ist, nicht vereist.

6.  Verfahren zum Aufheizen von Warmwasser mit dem Schritt, die Kalorien aus dem wärmsten Abschnitt der thermisch geschichteten Wässer eines Abwasserlagertanks (8) zu ziehen, mit einer Wärmepumpe, die einen Verdampfer (12) enthält, der im Abwasserlagertank (8) integriert ist, wobei der Verdampfer durch eine Tauchpumpe im Abwasserlagertank (8) versorgt wird, und die Pumpe (13) das wärmste Wasser im oberen Bereich des Tanks absaugt.

**FIGURE 1**

FIGURE 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4422932 A